# EUROPÄISCHE PATENTANMELDUNG

(11) **EP 0 611 255 A1**
(43) Veröffentlichungstag der Anmeldung: **17.08.1994**
(21) Anmeldenummer: 94810055.7
(22) Anmeldetag: 02.02.1994
(51) Int. Cl.: F16H 19/06

(54) **Zugmittel-Lineargetriebe**

(30) Priorität: 10.02.1993 CH 392/93
(71) Anmelder: Schalbetter, Dionys, CH-1893 Muraz (Collombey) (CH)
(72) Erfinder: Schalbetter, Dionys, CH-1893 Muraz (Collombey) (CH)

(57) **Zusammenfassung**

Zugmittel-Lineargetriebe einsetzbar überall wo oszilierende Linearbewegungen mit Rücktransport des Förderers verwendet werden. Das originelle System mit mehreren Varianten löst auf günstiger Weise die technischen Probleme in dem betreffenden Gebiet. Der entscheidenste Punkt des Patentes besteht darin, dass eine Geschwindigkeitsdifferenz zwischen den Zugmitteln (4 und 5) entsteht, da sich die Antriebsscheiben (1 und 2) mit derselben Drehzahl bewegen. Die Zugmittel (4 und 5) werden in Richtung des Förderes (6) um das Förderrad (7) geführt und zwar so, dass vom Zugmittel (4) das Leertrum (8L) und vom Zugmittel (5) das Krafttrum (9K) gegenseitig auf das Förderrad (7) einwirkt. Die Geschwindigkeitsdifferenz wird am Förderrad (7) durch eine Rotation und eine überlagerte Translation ausgeglichen, sodass der Förderer (6) je nach Richtung des Antriebes auf die eine oder andere Seite bewegt wird. Die Zugmittel (4 und 5) werden nun über den Förderer (6) zu den Umlenkscheiben (10 und 11) geführt.

## Beschreibung

In der Technik gibt es eine Vielzahl von Anwendungen, wo eine oszilierende Linearbewegung verlangt wird. Die hierbei geforderten Kräfte und Verfahrgeschwindigkeiten sind sehr unterschiedlich und unterliegen verschiedensten Anforderungen : hohe Geschwindigkeiten, genaues Positionieren, rasches Ansprechen auf Geschwindigkeitsänderungen, starrer oder elastischer Antrieb, etc.

Die bis heute bekannte Lösungen sind in folgenden Gebieten zu suchen. Hydraulik/Pneumatik (Zylinder), Mechanik (Zahnstangen- und Schraubengetriebe, Zugmittel mit feststehendem Förderer) Elektrik (Linearmotor).

Hydraulik/Pneumatik ermöglicht sehr komplexe Anlagen; allerdings erfordern diese einen grossen Aufwand (zentrale Druckerzeugung, Steuerblöcke, Rohrleitungen). Ebenfalls muss für genaues Positionieren von der Steuerung der Anlage auf ein Regeln ausgewiechen werden (Kompressibilität der Druckmedien, Gleichlauf bei parallelen Zylindern). Der Anlagenwirkungsgrad fällt bei der mehrfachen Energieumwandlung ziemlich stark ab. Auch ist es nicht möglich generatorisch zu bremsen.

Bei den mechanischen Lösungen wird die elektrische Energie zwar nahe an der Stelle in mechanische umgewandelt, wo diese gebraucht wird; doch erfordern die relativ hohen Drehzahldifferenzen zwischen Antrieb und Abtrieb zum Teil aufwendige Zwischengetriebe, welche die erforderlichen Abtriebsdrehmomenten, bezw. Verfahrkräfte erzeugen. Dadurch müssen recht grosse Kräfte über weite Strecken transportiert werden.

Beim Zahnstangengetriebe beschränkt sich die Positionierung auf eine Impulszählung am Eingang des Schrittmotors, doch wirken sich hier die Spiele in dem Zwischengetriebe, sowie zwischen Ritzel und Stange negativ auf die Genauigkeit aus. Dasselbe gilt auch für die Zugmittelgetriebe mit feststehendem Förderer, z.B. Verfahrschlitten festgeklemmt auf geschlossenem Zahnriemen, Seilwinden.

Bei den Schraubengetrieben, die normalerweise selbsthemmend ausgeführt sind, entfällt zusätzlich noch das generatorische Bremsen. Auch fällt bei dieser Ausführung der Gesamtwirkungsgrad wegen der Reibung im Gewinde ab. Die Rollengewinde weisen hingegen einen erhöhten Fabrikationsaufwand auf.

Der elektrische Linearmotor leistet zwar gute Dienste in der Feinwerktechnik, bei grösseren Kräften hat er sich jedoch nicht durchgesetzt.

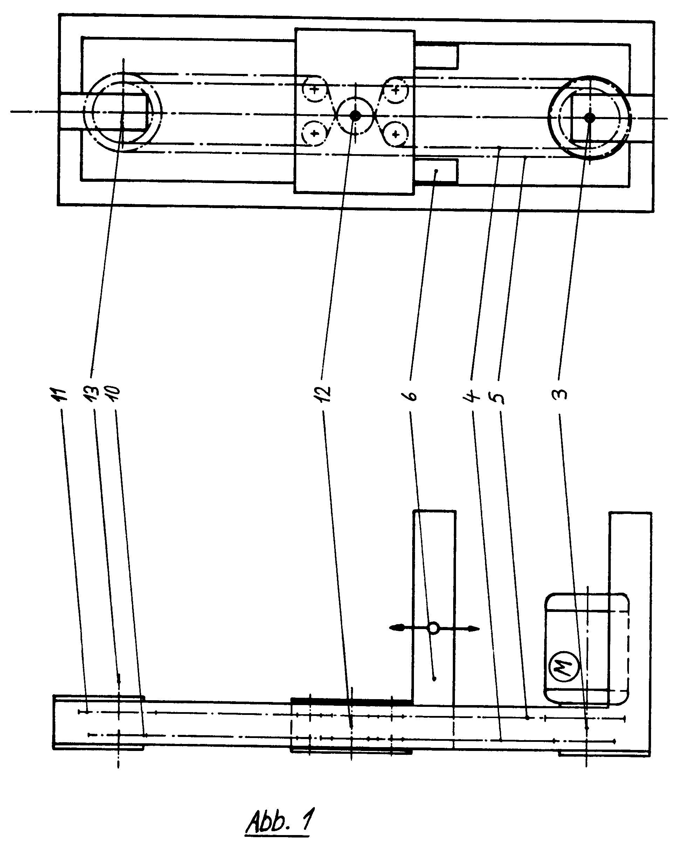

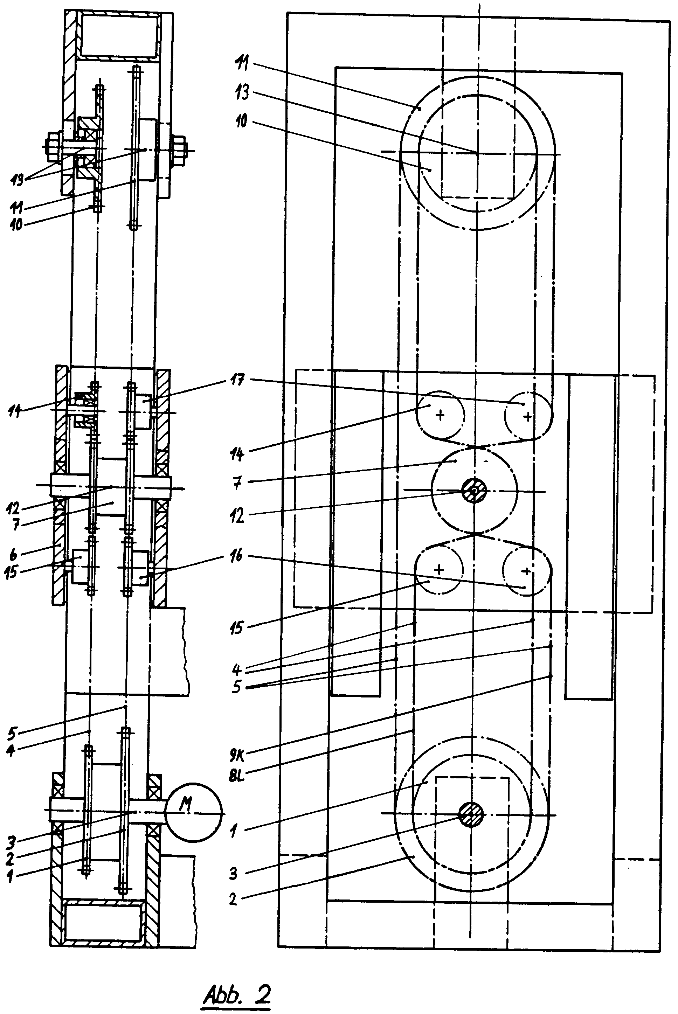

All diese Ausführungen haben zur Idee geführt, dass die erwähnten Nachteile mit einer Kombination von Translations und Rotationsbewegungen vermieden werden können. Die Abbildung 1 zeigt schematisch eine Ausführung des Zugmittel Lineargetriebes als Hubvorrichtung. Aus Abbildung 2 ist das Funktionsprinzip des Zugmittel-Lineargetriebes ersichtlich.

Auf die Antriebswelle 3, z.B. direkt auf die hochtourigen Motorwellen werden zwei Antriebsscheiben 1 und 2 mit verschiedenen Durchmessern aufgesetzt. Da sich beide Scheiben mit derselben Drehzahl drehen, entsteht eine Geschwindigkeitsdifferenz zwischen den Zugmitteln 4 und 5. Diese werden nun über einen Förderer 6 zu den Umlenkrollen 10, 11, 14, 15, 16 und 17 geführt. Im Förderer 6 werden die Zugmittel 4 und 5 so um das Förderrad 7 geführt, dass von dem Zugmittel 4 das Leertrum 8L und vom Zugmittel 5 das Krafttrum 9K gegenseitig auf das Förderrad 7 einwirkt. Die Geschwindigkeitsdifferenz wird am Förderrad 7 durch eine Rotation und eine überlagerte Translation ausgeglichen. Der Förderer 6 bewegt sich also je nach Drehrichtung des Antriebes 3 auf die eine oder andere Seite.

Da die Translationsgeschwindigkeit einem Bruchteil der Differenzgeschwindigkeiten der Zugmittel 4 und 5 entspricht, sind die Translationsgeschwindigkeiten von einigen Prozenten (Promille) der Umfangsgeschwindigkeit möglich. Entsprechend der kleinen Translationsgeschwindigkeit werden im Förderer 6 grosse Verfahrkräfte erzeugt.

Mit diesem originellen Prinzip können auch von kleinen, hochtourigen Motoren ohne zusätzliche Reduktionsgetriebe hohe Verfahrkräfte erzeugt werden. Bei Verwendung von formschlüssigen Zugmitteln beschränkt sich der Positionierfehler auf die Elastizität des Zugmittels. Neben der Spielfreiheit des Antriebes reduzieren sich ebenfalls die Reibungsverluste im Antriebsstrang.

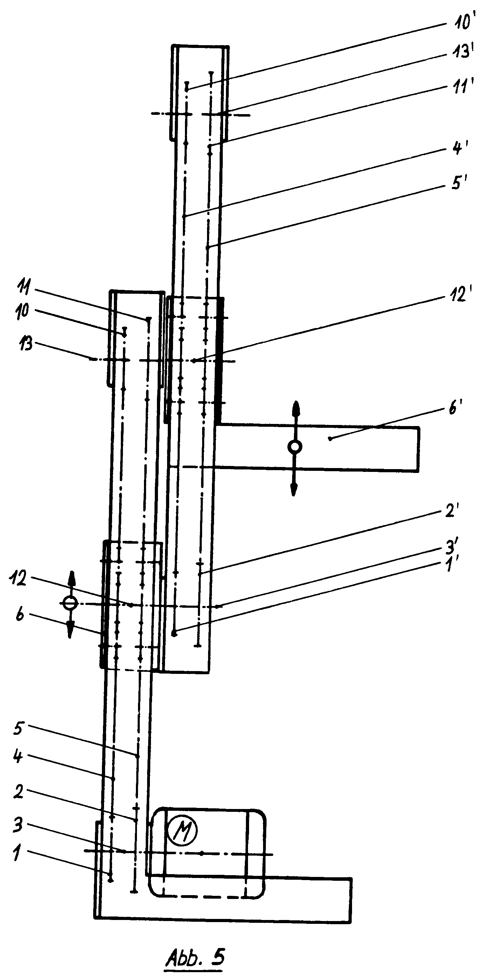

Die am Förderer 6 anfallende Drehzahl kann ebenfalls genutzt werden, z.B. als Antrieb eines Servoelementes oder als Antrieb eines weiteren Zugmittel-Lineargetriebes, wodurch sich bei formschlüssigen Zugmitteln ein genau definiertes teleskopartiges Ausfahren des Förderers 6' ergibt (Abbildung 5).

Die Wahl der Antriebsachse 3 ist willkürlich erfolgt. Der Antrieb, sowie Betriebs- und Sicherheitsbremsen können auf jeder der Achsen 3, 12 und 13 angebracht werden. Auch ist es möglich generatorisch zu bremsen.

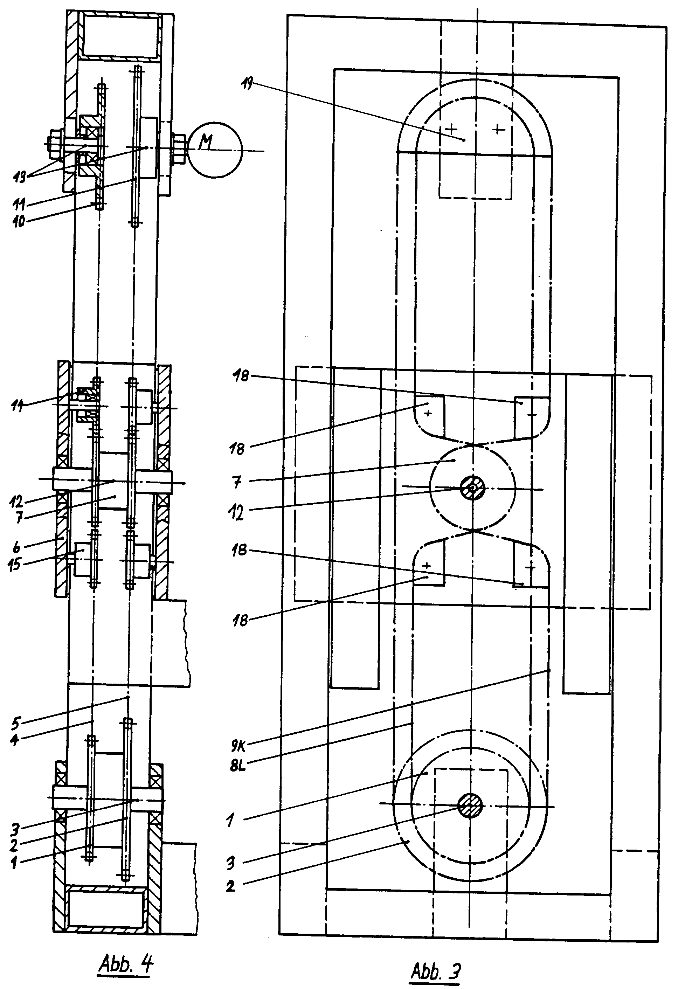

In einer Varianten können die Umlenkrollen 10, 11, 14, 15, 16 und 17 weggelassen werden oder durch Gleitelemente 18, 19 ersetzt werden (Abbildung 3) um das Bauvolumen zu verkleinern oder die Ausführung zu vereinfachen.

Um feinere Geschwindigskeitsabstufung zu erreichen gibt es eine weitere Variante indem das Förderrad 7 ungleiche Wirkdurchmesser für die Zugmittel 4 und 5 aufweist.

Eine weitere Variante ergibt sich dadurch, dass der Antrieb nur auf ein Zugmittel einwirkt (Abbildung 4).

Weiterhin kann das gesamte System auch als Positionsgeber für wenigstens eine fremderzeugte Bewegung verwendet werden, indem der Motor durch einen Tachogenerator ersetzt wird.

Das zugmittel-Lineargetriebe laut des Erfinderpatentes kann überall dort eingesetzt werden wo oszilierende Linearbewegungen mit Rücktransport des Förderes gebraucht werden.

## Patentansprüche

1. Zugmittel-Lineargetriebe, gekennzeichnet durch eine Kombination von Translations- und Rotationsbewegungen, die es ermöglicht ungleiche Umfangsgeschwindigkeiten auszugleichen. Für diese neuartige Technik werden zwei Antriebsscheiben (1 und 2) mit verschiedenen Durchmessern auf die Antriebswelle (3) z.B. direkt auf die hochtourigen Motorwelle aufgesetzt. Eine Geschwindigkeitsdifferenz zwischen den Zugmitteln (4 und 5) entsteht da sich die Antriebsscheiben (1 und 2) mit derselben Drehzahl bewegen. Die Zugmittel (4 und 5) werden in Richtung des Förderes (6) um das Förderrad (7) geführt und zwar so, dass vom Zugmittel (4) das Leehrtrum (8L) und vom Zug mittel (5) das Krafttrum (9K) gegenseitig auf das Förderrad (7) einwirkt. Die Geschwindigkeitsdifferenz wird am Förderrad (7) durch eine Rotation und eine überlagerte Translation ausgeglichen, sodass sich der Förderer (6) je nach Drehrichtung des Antriebes auf die eine oder andere Seite bewegt. Die Zugmittel (4 und 5) werden nun über den Förderer (6) zu den Umlenkscheiben (10 und 11) geführt.
Diese neue Technologie nach welcher die Translationsgeschwindigkeit einem Bruchteil der Differenzgeschwindigkeit der Zugmittel (4 und 5) entspricht, sind Translationsgeschwindigkeiten von einigen Prozenten (Promille) der Umfangsgeschwindigkeit der Antriebsscheiben (1 und 2) möglich.
Mit diesem vorbildlichen Prinzip können auch von kleinen, hochtourigen Motoren ohne zusätzliche Reduktionsgetriebe hohe Verfahrkräfte erzeugt werden. Bei Verwendung von formschlüssigen Zugmitteln beschränkt sich der Positionsfehler auf die Elastizität des Zugmittels. Neben der Spielfreiheit des Antriebes reduzieren sich ebenfalls die Reibungsverluste im Antriebsstrang.

2. Zugmittel-Lineargetriebe, nach Patentanspruch 1, dadurch gekennzeichnet, dass die am Förderer (6) anfallende Drehzahl ebenfalls genutzt werden kann, z.B. als Antrieb eines Servoelementes oder als Antrieb eines weiteren Zugmittel-Lineargetriebes, wodurch sich bei formschlüssigen Zugmitteln ein genau definiertes teleskopartiges Ausfahren des Förderes (6') ergibt.

3. Zugmittel-Lineargetriebe, nach Patentansprüche 1 und 2, dadurch gekennzeichnet, dass die Antriebsachse (3) willkürlich erfolgen kann. Der Antrieb, sowie Betriebs- und Sicherheitsbremsen können auf jeder der drei Achsen (3, 12 und 13) angebracht werden. Mit selbst- oder fremdbetätigten Kuplungen oder Bremsen auf den verschiedenen Achsen können die Translationsgeschwindigkeiten variiert werden.

4. Zugmittel-Lineargetriebe, nach Patentansprüche 1, 2 und 3, dadurch gekennzeichnet, dass die Umlenkrollen (10, 11, 14, 15, 16 und 17) weggelassen oder durch Gleitelemente (18 und 19) ersetzt werden können.

5. Zugmittel-Lineargetriebe, nach Patentansprüche 1, 2, 3 und 4, dadurch gekennzeichnet, dass das Förderrad (7) ungleiche Wirkdurchmesser für die Zugmittel (4 und 5) aufweist um feinere Geschwindigkeitsabstufung zu erreichen.

6. Zugmittel-Lineargetriebe, nach Patentansprüche 1, 2, 3, 4 und 5, dadurch gekennzeichnet, dass der Antrieb nur auf ein Zugmittel einwirkt.

7. Zugmittel-Lineargetriebe, nach Patentansprüche 1, 2, 3, 4, 5 und 6, dadurch gekennzeichnet, dass das gesamte System auch als Positionsgeber für wenigstens eine fremderzeugte Bewegung verwendet werden kann, indem der Motor durch einen Tachogenerator ersetzt wird.
